# EUROPÄISCHE PATENTANMELDUNG

(11) **EP 0 725 556 A2**
(43) Veröffentlichungstag der Anmeldung: **07.08.1996**
(21) Anmeldenummer: 96100452.0
(22) Anmeldetag: 13.01.1996
(51) Int. Cl.: H05B 3/68, H05B 1/02

(54) **Verfahren und Einrichtung zur Übermittlung von Daten von einem Kochgefäss zu einer Kocheinrichtung**

(30) Priorität: 31.01.1995 DE 19502935
(71) Anmelder: E.G.O. Elektro-Geräte Blanc und Fischer GmbH & Co. KG, D-75038 Oberderdingen (DE)
(72) Erfinder: Bogdanski, Franz, Dr.-Ing., D-75038 Oberderdingen (DE); Essig, Willy, Dipl.-Ing., D-71034 Böblingen (DE); Auwärter, Wolfgang, Dr., CH-8486 Rikon (CH); Hüppi, Marcel W., Dr., CH-9524 Zuzwil (CH); Pardoen, Matthijs D., Dipl.-Ing., CH-2074 Marin-Epagnier (CH); Gerrits, John, Dipl.-Ing., CH-2016 Cortaillod (CH)
(74) Vertreter: Patentanwälte Ruff, Beier, Schöndorf und Mütschele

(57) **Zusammenfassung**

Es wird ein System zur Lokalisierung eines an einem Kochgefäß (17) vorgesehenen oder anzubringenden Senders (20) geschaffen, mit dem die Kocheinrichtung (11) ermitteln kann, über welcher Kochstelle (14) sich der Sender und damit das Kochgefäß befindet. In Abhängigkeit davon werden die entsprechenden Heizeinheiten geschaltet bzw. geregelt. Der Sender (20) übermittelt Zustandsdaten oder auch Einstellwerte.

Zur Lokalisierung sind mehrere Antennen an der Kocheinheit angeordnet, die in Abhängigkeit von der Feldverteilung bzw. dem Feldlinienverlauf ein bestimmtes Polarisierungs- bzw. Phasenlagenmuster erkennen lassen, das einer bestimmten Sendeposition zugeordnet ist.

## Beschreibung

### ANWENDUNGSGEBIET UND STAND DER TECHNIK

Die Erfindung betrifft ein Verfahren und eine Einrichtung zur Übermittlung von Daten von einem Kochgefäß zu einer Kocheinrichtung mit wenigstens zwei Kochstellen mittels drahtloser Datenübermittlung. Um einen Kochvorgang regeln zu können, sollte nach Möglichkeit der Zustand des Kochgutes selbst als Regelgröße herangezogen werden. Dies geschieht am besten durch unmittelbar am Kochgefäß vorgesehene Zustandsfühler. Dabei ergibt sich jedoch das Problem, daß das Kochgefäß gegenüber der Kocheinrichtung beweglich ist.

Aus der DE 21 61 371 ist es bekanntgeworden, die Daten eines auf einem Kochdeckel angeordneten Meßfühlers per drahtloser Übertragung an ein in der Kocheinrichtung vorgesehenes Regelgerät zu übertragen. Aus der DE-A 29 01 556 ist eine Induktionskochstelle bekannt geworden, bei der ebenfalls zur Übertragung von Daten eines auf den Kochtopfdeckel aufgesetzten Temperaturfühlers an die Steuerung der Induktionsbeheizung eine drahtlose Übertragung in Form elektromagnetischer Wellen, Ultraschall oder Infrarot erfolgt.

Bei der Verwendung dieser drahtlosen Einheiten muß der Benutzer große Disziplin bewahren, um jeweils das Kochgefäß mit dem zu der entsprechenden Kochstelle Daten übermittelnden Sender auf diese zu stellen. Hierbei könnten Verwechslungen geschehen, so daß dann die jeweils falsche Kochstelle angesprochen wird.

### AUFGABE UND LÖSUNG

Aufgabe der Erfindung ist es, mittels des Verfahrens und der Einrichtung die Arbeitsweise der Kocheinrichtung soweit zu vereinfachen, daß die Bedienungsperson auf die Zuordnung zwischen Kochgefäß und Kochstelle nicht mehr zu achten braucht.

Diese Aufgabe wird durch ein Verfahren und eine Einrichtung nach den Ansprüchen 1 und 13 gelöst.

Dadurch, daß das dem jeweiligen Kochgefäß zugeordnete Signal durch Signalaufnehmer, die sich in einer der Kocheinrichtung zugeordneten, d.h. relativ zu dieser festen Position befinden, empfangen und dann positionsabhängig ausgewertet werden, wird die Zuordnung des Kochgefäßes zu einer bestimmten Kochstelle automatisch vorgenommen. Die Bedienungsperson kann also das Kochgefäß auf eine beliebige Kochstelle stellen, die entsprechend ausgerüstet ist oder von einer Kochstelle auf die andere verschieben, ohne daß die Zuordnung verloren ginge. Die Kochstelle, auf der sich das Kochgefäß befindet, wird stets in Abhängigkeit von den Daten arbeiten, die vom Sender am Kochgefäß ausgesandt werden. Dabei kann es sich um Temperatur-, Druck-, Feuchtigkeits- oder ähnliche Daten handeln, die von einem Fühler z.B. am Deckel oder im Kochgefäß selbst ermittelt und von einem Sender z.B. am mittleren Deckelknopf oder am Henkel bzw. Griff des Kochgefäßes ausgesandt werden. Zur drahtlosen Datenübermittlung eignen sich grundsätzlich alle Signaltypen, die für diese Kurzstreckenübertragung einsetzbar sind, also Ultraschall, Infrarot und elektromagnetische Signale. Die letzteren sind besonders bevorzugt. Die Signalaufnehmer sind in diesem Falle richtungsorientierbare Antennen (Spulen), die mit einem Empfänger zusammenarbeiten. Besonders bevorzugt können für derartig kurze Entfernungen Sender und Empfänger mittels eines magnetischen Wechselfeldes nach dem Prinzip des Lufttransformators bzw. mit Gegeninduktivität zusammenarbeiten. In diesem Falle sind Sender und Signalaufnehmer Spulen, die in Schwingkreisen gleichzeitig die Induktivitäten bilden können.

Die Auswertung kann einen Vergleich der Phasenlage der von den einzelnen Signalaufnehmern empfangenen Signale beinhalten. Das übermittelte Signal kann in dem wenigstens einen Aufnehmer in Abhängigkeit von der Position des Senders ein Muster von Polarität bzw. Phasenlage hervorrufen, das zur Positionserkennung ausgewertet wird.

Die Auswertung kann durch Vergleich der Feldausrichtung in wenigstens einem Zuordnungs-Signalaufnehmer, in dem das Feld seine Orientierung je nach Positionierung ändert, mit der stets gleichbleibenden Feldorientierung in wenigstens einem Referenz-Signalaufnehmer erfolgen. In diesem Falle kann die Ermittlung durchgehend zu jedem beliebigen Zeitpunkt erfolgen. Der Referenz-Signalaufnehmer könnte jedoch eingespart werden, wenn der Sender phasenabhängig ein Triggersignal aussendet, das den Meßzeitpunkt für die Bestimmung der Polarität bzw. Phasenlage an dem wenigstens einen Aufnehmer bestimmt. In diesem Falle könnte man bei einer Kocheinrichtung mit zwei Kochstellen mit einem einzigen Signalaufnehmer auskommen, der beispielsweise zwischen beiden Kochstellen angeordnet ist und in dem durch das Triggersignal bestimmten Referenz-Meßzeitpunkt eine bestimmte Polarität hat.

Die Signale können in gewissen Zeitabständen gesendet werden. Da sich die Meßdaten meist mit einem recht kurzen Code von beispielsweise 8 oder 16 Bit übermitteln lassen, nimmt die Signalübertragung im Vergleich zur natürlichen Trägheit der Kochstellenbeheizung eine so kurze Zeit in Anspruch, daß auch bei zahlreichen Kochstellen jeweils genug Zeit für die einzelnen Sender ist, ihre Signale in den Pausen der Signalübertragung der anderen Sender zu übermitteln. Um jedoch eine Signalmischung zu vermeiden, können die Signale von unterschiedlichen Sendern nacheinander gesendet werden, wobei der Sendezeitpunkt jeweils durch einen dem Sender zur Abstimmung der Sendezeit zugeordneten Empfänger gesteuert wird. Diese Sendeart wird als TDMA (Time Division Multiplexing Access) bezeichnet. Es ist jedoch auch möglich, die Übertragung in FDMA (Frequency Division Multiplexing Access), d.h. mit von Sender zu Sender verschiedenen Frequenzen, zu arbeiten.

Die Übermittlung binärer Signale kann mit Frequenzverschiebungs-Verschlüsselung (Frequency Shift Keying FSK) erfolgen. Dabei werden die beiden "1" und "0" repräsentierenden Signale durch verschiedene Frequenzen gebildet.

Im Falle von Kochstellen, bei denen die Leistung durch magnetische Wechselfelder übertragen wird, beispielsweise bei Induktionskochstellen, könnte die Datenübermittlung durch dieses Wechselfeld trotz unterschiedlicher Frequenzen, z.B. durch Oberschwingungen, gestört oder unmöglich gemacht werden. In diesem Fall ist vorgesehen, daß zur Datenübermittlung die Induktionskochstellen zeitweise abgeschaltet werden. Eine solche Pause (slot) kann sehr kurz sein, so daß er die Leistungsübertragung fast nicht beeinträchtigt. Bei vielen Induktionskochstellen sind derartige Pausen ohnehin zur Messung anderer Daten, beispielsweise zur Topferkennung und zur Leistungssteuerung, vorgesehen.

Die Einrichtung nach der Erfindung umfaßt wenigstens einen einem Kochgefäß zugeordneten Sender und einen Empfänger für die übermittelten Daten, wobei der Empfänger an wenigstens einen positionsabhängig arbeitenden Signalaufnehmer angeschlossen ist. Es sind ferner Positionserkennungsmittel vorgesehen, die die positionsabhängigen Signale des wenigstens einen Signalaufnehmers verarbeiten und die Datensteuermittel derjenigen Kochstelle zuleiten, auf der sich das den Sender aufweisende Kochgefäß befindet.

Es können mehrere Signalaufnehmer an unterschiedlichen Positionen der Kocheinrichtung angeordnet sein, um die positionsabhängigen Signale zu empfangen. Als Signalaufnehmer können bei Verwendung von elektromagnetischen Feldern im folgenden als Antennen bezeichnete Spulen oder ähnliche Mittel vorgesehen sein, die eine Unterscheidung der Feldorientierung bzw. Phasenlage der Signale ermöglichen.

Die elektromagnetische Feldverteilung um den Sender herum erfolgt, insbesondere bei der Anordnung des Senders auf einem meist metallischen Kochgefäß, nach Art eines Torus, d.h. Feldlinien verlaufen vom Sender über eine Luftstrecke gekrümmt nach unten, können dann eine nichtmetallische Kochfläche, beispielsweise eine Glaskeramikplatte, durchdringen und von unten her außen am Kochgefäß entlang zum Sender zurück verlaufen. Bei einer solchen Anordnung ist es möglich, durch Anordnung von Antennen (Spulen) mit vertikaler Achse in der Ebene der Heizelemente die Orientierung des Feldes in verschiedenen Abständen von dem Sender zu messen. Man erhält dabei unterschiedliche Orientierungen (Polaritäten bzw. Phasenlagen) in unterschiedlichen Abständen von dem Sender, was zur Positionserkennung verwendet werden kann. So kann beispielsweise bei einem 4-Kochstellen-Gerät eine mittlere Antenne als Referenzantenne dienen. Sie würde bei Anordnung der Sender über jeder der vier Kochstellen jeweils die gleiche Orientierung des Feldes wahrnehmen, während sich die Orientierung von im Außenbereich des Kochgerätes, d.h. außerhalb der Kochstellen abhängig davon ändert, ob der Sender sich über der jeweilige Kochstelle befindet oder nicht.

Wenn im Bereich der Kochmulde eine metallische Platte vorliegt, beispielsweise in Form der unteren Muldenabdeckung, so ist die freie Ausbreitung des Feldes gestört und das Feld wird sich, abgesehen von der halb-torusförmigen Luftstrecke, im wesentlichen horizontal zu dieser Platte orientieren. In diesem Falle bietet sich eine horizontale Antennenanordnung an, d.h. die Antennenpolarität würde durch die Richtung des magnetischen Feldes parallel zu der Herdfläche bestimmt werden. In diesem Falle könnten beispielsweise Referenzantennen im Umfeld der Kochstellen angeordnet sein. Sie würden stets diegleiche Feldausrichtung erhalten, wenn ein Sender sich innerhalb des Bereiches der Kochstellen befindet, während z.B. um 90° in ihren Spulenachs-Orientierungen gegeneinander versetzte Antennen im Zentrum der Kocheinrichtung jeweils abhängig von der Position des Senders unterschiedliche Feldrichtungen und -orientierungen feststellen würden. Durch Vergleich dieser Polaritäten kann dann der Quadrant ermittelt werden, innerhalb dessen sich der Sender befindet und die in diesem Quadranten wegen der Kochstelle entsprechend mit Regeldaten versorgt werden.

Besonders bei dieser Anordnung, jedoch auch bei anderen Ausführungen ist es möglich, gleichzeitig festzustellen, ob der Sender auch wirklich im Bereich einer Kochstelle positioniert ist oder beispielsweise zwar in Richtung der Kochstelle (in ihrem Quadranten), jedoch weiter außerhalb liegt. Dies kann durch entsprechende Antennenanordnung festgestellt werden. Bei der beschriebenen Anordnung mit Referenzantennen am Außenumfang der Kocheinrichtung würde sich nämlich die Feldrichtung in einer dieser äußeren Referenzantennen umkehren, wenn der Sender sich außerhalb der Kocheinrichtung befindet. Dann könnte ein Fehlpositionnierungssignal erzeugt werden, das die entsprechende Kochstelle abschaltet. Damit könnte die Einrichtung gleichzeitig zur Topferkennung dienen.

Der Sender kann zur reinen Übermittlung von Meßdaten, beispielsweise Zustandsdaten wie Temperatur oder Druck, verwendet werden. Beispielsweise könnte der Sender einen Fühler für die Stellung eines druckabhängig verschiebbaren Stiftes am Deckel eines Dampfkochtopfes aufweisen. In diesem Falle wäre an den Steuermitteln der Kochstelle, d.h. an der Kocheinrichtung selbst eine entsprechende Auswertung und auch eine manuelle Einstellung vorzunehmen. Dies wäre insofern anders als bei bisherigen Kochstellen, als dort dann die Zuordnung zu dem einzelnen Topf und nicht zur einzelnen Kochstelle erfolgen sollte. Besonders sinnvoll wäre es jedoch, die jeweilige Einstellung von Temperatur, Kochdauer oder die Vorgabe eines bestimmten Kochprogrammes (z.B. schnelles Vorkochen, mildes Fortkochen) am Sender selbst vorzunehmen und dort eine manuelle Einstellmöglichkeit für den Kochvorgang vorzusehen. In diesem Falle hätte die Hausfrau völlige Freiheit in der Verwendung ihres Herdes. Sie könnte die entsprechenden Speisen im Kochgefäß vorbereiten und das entsprechende Kochprogramm am Sender bzw. einem daran angeschlossenen Steuergerät einstellen. Wenn sie dann die Kochstellen auf "Automatiksteuerung durch das Kochgefäß" einstellt, oder dem Kochgefäß mit seiner an den Sender angeschlossenen Regel- bzw. Meßeinrichtung automatisch der Vorrang gegenüber der Leistungseinstellung am Gerät gegeben wird, so beginnt der Kochvorgang dann, wenn sie das Kochgefäß auf irgend eine der vorhandenen Kochstellen stellt. Es ergeben sich hiermit besonders gut ergonomische Möglichkeiten, indem gerade diejenigen Kochgefäße, an denen irgendwelche manuellen Arbeiten nötig sind (Rühren, Wenden oder dgl.) in die jeweils arbeitsgünstigste Position gebracht werden können. In Verbindung mit einer trägheitsarm arbeitenden Heizung, wie beispielsweise einer Strahlungsbeheizung, wie sie von der Anmelderin unter dem Warenzeichen "HiLight" hergestellt wird, oder einer Induktionsbeheizung, ergibt sich eine von den Betriebsbedingungen her optimale Kocheinrichtung, die durch die dem Kochgefäß und damit dem Kochgut genau angepaßte Beaufschlagung der Heizung auch sehr energiesparend arbeitet.

Durch die Erfindung wird ein System zur Lokalisierung eines an einem Kochgefäß vorgesehenen oder anzubringenden Senders geschaffen, mit dem die Kocheinrichtung ermitteln kann, über welcher Kochstelle sich der Sender und damit das Kochgefäß befindet. In Abhängigkeit davon werden die entsprechenden Heizeinheiten geschaltet bzw. geregelt. Der Sender übermittelt Zustandsdaten oder auch Einstellwerte.

Zur Lokalisierung sind mehrere Antennen an der Kocheinheit angeordnet, die in Abhängigkeit von der Feldverteilung bzw. dem Feldlinienverlauf ein bestimmtes Polarisierungs- bzw. Phasenlagenmuster erkennen lassen, das einer bestimmten Sendeposition zugeordnet ist.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird.

### KURZBESCHREIBUNG DER ZEICHNUNG

Ausführungsbeispiele der Erfindung sind in den Zeichnungen dargestellt und werden im folgenden näher erläutert. In den Zeichnungen zeigen:
- Fig. 1: eine Draufsicht auf eine Kocheinrichtung mit vier Kochstellen mit schematischer Andeutung der meist unsichtbar unter einer Kochfläche angeordneten Signalaufnehmer (Antennen/senkrecht stehende Spulen),
- Fig. 2: einen schematischen Schnitt nach der Linie II in Fig. 1,
- Fig. 3: eine Diagramm-Darstellung der aus den von den Antennen aufgefangenen Signalen gebildeten Rechtecksignale,
- Fig. 4: ein schematisches Blockschaltbild der Senderanordnung,
- Fig. 5: ein schematisches Blockschaltbild der von einem Empfänger gesteuerten Steuermittel für vier Kochstellen,
- Fig. 6: ein schematisches Blockschaltbild einer Empfänger- und Kochgefäßlokalisierungs-Schaltung für eine Antennen/Spulenkonstellation entsprechend Fig. 1 und 2,
- Fig. 7: eine schematische Darstellung des Senders und seiner Sendespulen (Antennen),
- Fig. 8: eine Draufsicht auf eine Kocheinrichtung mit vier Kochstellen mit angedeuteter horizontaler Antennen/Spulenanordnung, wobei aus Gründen der Übersichtlichkeit die Feldlinienverläufe sehr vereinfacht wiedergegeben sind, um das Funktionsprinzip besser zu erklären, und
- Fig. 9: ein schematisches Blockschaltbild einer Empfänger- und Positionserkennungsschaltung für die Antennen/Spulenkonstellation nach Fig. 8.

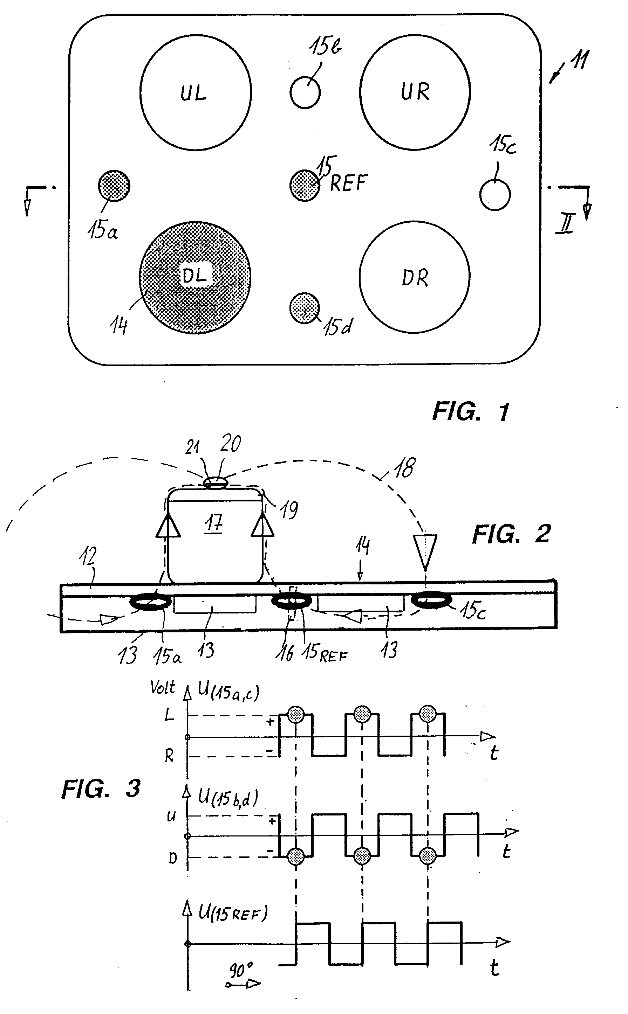

### BESCHREIBUNG DES AUSFÜHRUNGSBEISPIELS NACH DEN FIG. 1 - 6

Fig. 1 und 2 zeigen eine Kocheinrichtung 11, die beispielsweise eine Herdmulde mit einer oberen Glaskeramikplatte 12 umfassen kann, unter der nur schematisch angedeutete Heizeinheiten, beispielsweise Strahlungs- oder Induktionseinheiten 13 angeordnet sind, die jeweils eine Kochstelle 14 beheizen. Zwischen den im Rechteck oder Quadrat angeordneten, ihrerseits runden Kochstellen 14 sind unter der Platte 12 Signalaufnehmer 15 angeordnet, von denen der mittlere ein mit REF bezeichneter Referenzaufnehmer ist, während die jeweils im Außenbereich zwischen den Kochstellen angeordneten vier übrigen Signalaufnehmer 15a - d Zuordnungs-Signalaufnehmer sind.

Die Signalaufnehmer, die im folgenden auch als Antennen bezeichnet werden, sind im vorliegenden Fall senkrecht stehende Spulen mit Ferritkernen 16, die von der vertikalen Feldkomponente angeregt werden, und zwar entsprechend der Feldorientierung (von oben nach unten oder unten nach oben).

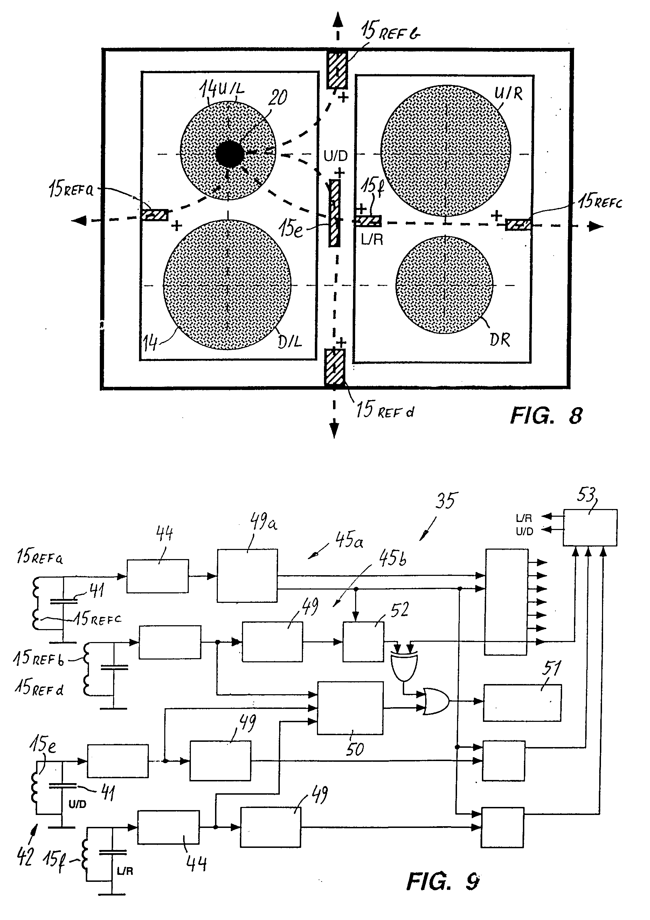

Fig. 2 zeigt ein Kochgefäß 17 auf der in Fig. 1 unteren linken, mit DL bezeichneten Kochstelle 14. Auf dem Deckel 19 des Kochgefäßes 17 ist ein Sender 20 vorgesehen, der eine Sendeantenne 21 (siehe Fig. 8) ebenfalls in Form einer Spule mit vertikaler Achse enthält. Die von diesem Sender 20 ausgehenden magnetischen Feldlinien 18 eines elektromagnetischen Wechselfeldes verlaufen mit ihren Feldlinien 18 so, daß sie nach einer entsprechenden Luftstrecke die Platte 12 durchdringen, dann unterhalb dieser zum Kochgefäß zurücklaufen und dort wieder nach oben hindurch treten. Daraus ergibt sich, daß z.B. in Fig. 1 und 2 die nahe am Kochgefäß 17 und seinem Sender 20 liegenden Antennen 15a und 15d vom Feld in der gleichen Orientierung durchdrungen werden wie die Referenzantenne 15REF, während die beiden vom Sender 20 entfernter liegenden Antennen 15b und 15c in Gegenrichtung vom Feld durchdrungen werden.

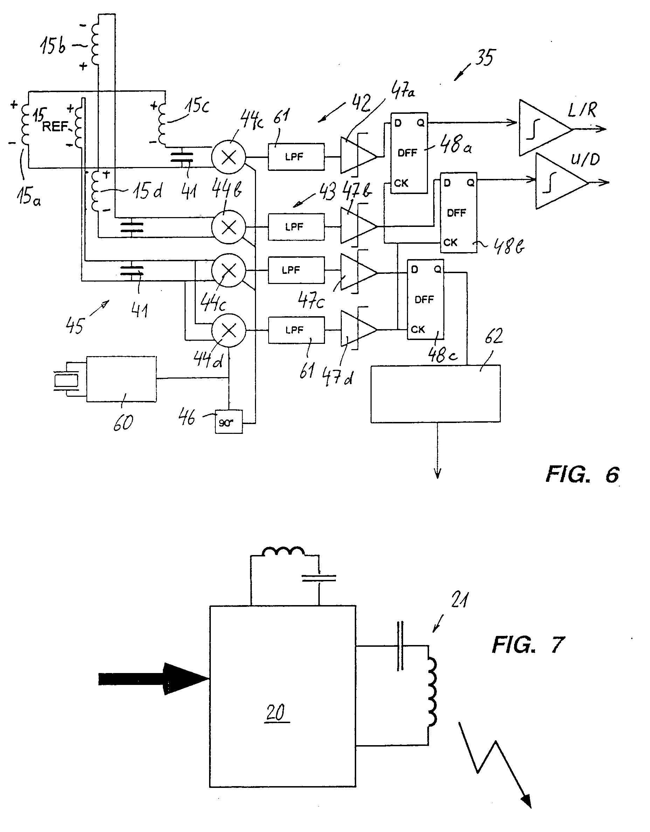

Wenn nun in der im folgenden anhand von Fig. 6 noch näher beschriebenen Weise ein vom Sender ausgesandtes Wechselfeld nach Umwandlung in Rechtecksignale und nach 90°-Phasenschiebung des Referenzsignals REF, wie in Fig. 3 dargestellt, betrachtet wird, so ergibt sich (bei Reihenschaltung jeweils einander gegenüberliegender Antennen 15a und c und 15b und d) eine klare Positionserkennung. Zum Referenzzeitpunkt 22, gekennzeichnet durch die ansteigende Flanke des Referenzsignales, zeigt z.B. die positive Polarität des Antennensignals 15a/15c und die negative Polarität des Antennensignals 15d/15b an, daß sich der Topf auf der linken unteren Kochstelle 14DL befindet.

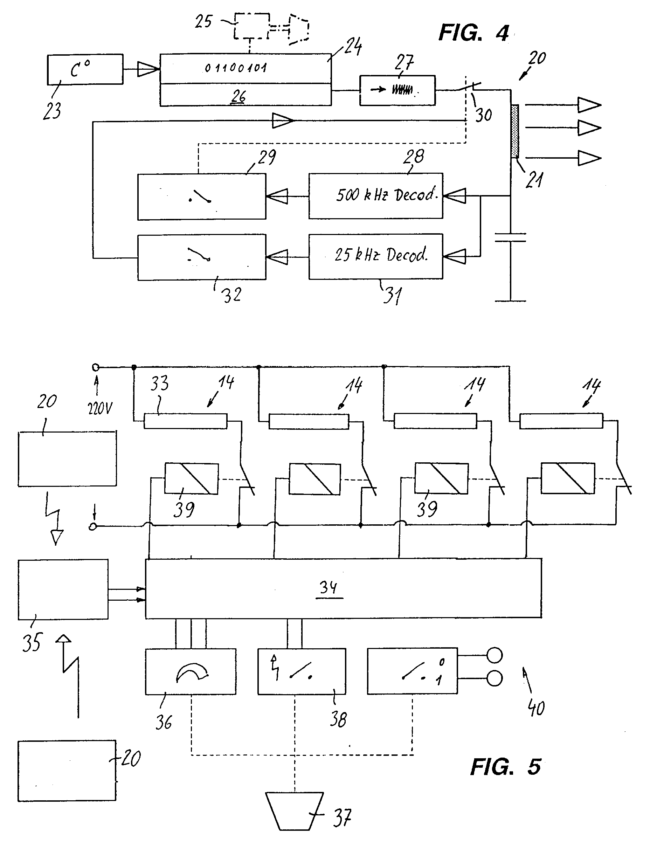

Fig. 4 zeigt ein Blockschaltbild des Senders 20. Der Sender erhält von einem Temperaturfühler 23 Zustandsdaten über die Temperatur des Kochgutes, sei es mit direkter Temperaturmessung oder mittels der Messung der Temperatur des Dampfes aus dem Kochgut. Diese Daten werden einer Einheit 24 zur Prozeßdatenaufbereitung zugeführt, die beispielsweise auch einen Mikroprozessor mit verschiedenen gespeicherten Kochprogrammen enthalten kann und über ein am Sender vorgesehenes Einstellgerät 25 manuell auf eine bestimmte Temperatur oder ein bestimmtes Kochprogramm eingestellt werden kann. Gegebenenfalls könnte sich aber die Prozeßdatenaufbereitung auch nur auf eine z.B. binäre Verschlüsselung der Signale des Fühlers 23 beschränken. In einer angeschlossenen Einheit 26 wird der entsprechende Code erzeugt, mit dem die Ausgangsdaten aus der Prozeßdatenaufbereitung dem eigentlichen Sender 27 zugeführt werden. Der Sender überträgt mittels der Sendeantenne 21 das Signal beispielsweise bei einer Sendefrequenz von 500 kHz in der Modulierungsart FSK, d.h. in Frequenzverschiebungs-Verschlüsselung. Ein in der Einheit 24, 26 erzeugtes 8-Bit-Datenwort wird im Sender um weitere für den Sende- und Empfangsbetrieb erforderliche Bits erweitert (ca. 8 Bit) und mit einer Geschwindigkeit von z.B. 1000 Bit/s ausgesendet. Nach einer Sekunde wird das nächste Datenwort gesendet. Um in der Datenübermittlung Kollisionen mit anderen Sendern von Kochgeschirren zu vermeiden, die auf der gleichen Frequenz senden, darf jeweils nur ein Sender aktiv sein. Deshalb wird der Sender zusätzlich mit einem einfachen Empfänger ausgestattet, der feststellt, ob ein benachbarter Topf zur gleichen Zeit sendet. Dieser Empfänger 28, der auch als ein 500 kHz Dekoder bezeichnet ist, kann mit der gleichen Antenne arbeiten. Dieser Empfänger hört periodisch, ob ein Sender von einem anderen Kochgefäß aktiv ist. In diesem Fall werden keine Daten übertragen. Nach einer Wartezeit von beispielsweise 20 ms wird überprüft, ob die Sendefrequenz jetzt frei ist. Diese Überprüfung wird so oft durchgeführt, bis kein anderer Sender mehr aktiv ist. Danach beginnt die Datenübertragung. Zu diesem Zweck arbeitet der Empfänger 28 mit einer Sperrschaltung 29 zusammen, die (durch den Schalter 30 angedeutet) den Sender außer Betrieb setzt, wenn der Empfänger 28 Signale anderer Sender empfängt.

Ferner ist ein weiterer Empfänger 31 vorhanden, der sehr breitbandig auf ca. 25 kHz eingestellt ist. Er empfängt die von einer Induktionsbeheizung stammenden elektromagnetischen Wechselfelder, die üblicherweise eine Grundfrequenz von 25 kHz haben. Das von der Induktionsheizung erzeugte Feld würde eine gesicherte Datenübertragung ausschließen, weil die harmonischen Frequenzen dieses Feldes bis in den Megahertzbereich hineinreichen. Zur Datenübertragung wird die Induktionskochstelle kurz abgeschaltet, was bei einigen Reglungsarten von Induktionskochstellen ohnehin periodisch erfolgt. Wenn der Empfänger 31 keine Signale empfängt, dann gibt er über die Sperrschaltung 32 den Sendebetrieb des Senders 27 frei.

Der Sender kann bei der sehr kurzfristig und mit geringer relativer Einschaltdauer arbeitenden Datenübertragung sehr energiesparend und mit einer Knopfbatterie über einen großen Zeitraum arbeiten. Es ist jedoch auch möglich, aufladbare Batterien einzusetzen, ggf. mit Selbstaufladungsaggregaten (Solar, induktive Übertragung durch das Induktions-Kochfeld oder eine berührungslose induktive Ladevorrichtung am Aufbewahrungsort).

Fig. 5 zeigt eine Schaltungsanordnung, die der Kocheinheit zugeordnet ist und im vorliegenden Fall die Beheizung 33 von vier Kochstellen 14 a bis d steuert bzw. regelt. Zentraleinheit ist ein Mikroprozessor 34, der folgende Funktion hat: Er erhält von einer Empfangseinheit 35, die anhand von Fig. 6 noch beschrieben wird, einerseits Daten, z.B. in Form des vom Sender 20 dem Empfänger 35 zugeleiteten Datenworts, und die Information über die Position der das jeweilige Signal aussendenden Sendeeinheit 20. Dies verarbeitet der Mikroprozessor zusammen mit einer eventuell vorgesehenen Information über Leistungseinstellung oder Kochprogramm aus der Einheit 36. Diese wird ebenso von einem Einstellknebel 37 betätigt, wie eine Einheit 38 zur Einschaltung der Steuerung direkt vom Kochtopf und ein Ein- und Ausschalter für das Netz der Steuereinheit.

Es sind so viele Knebel und Einstellmöglichkeiten vorgesehen, wie Kochstellen. Mikroprozessor 34 und Empfangseinheit 35 sind jedoch für alle Kochstellen gemeinsam.

Der Mikroprozessor steuert entsprechend der empfangenen Daten der Empfangseinheit Relais 39 an, die die Beheizungen 33 der einzelnen Kochstellen 14 z.B. durch taktendes Ein- und Ausschalten regeln. Die gesamte Steuereinheit 40 befindet sich beispielsweise im Steuerkasten eines Herdes oder einer Mulde. Die Leistungseinstellung über die Einheit 36 ist hauptsächlich dazu vorgesehen, den Herd zu betreiben, wenn ohne die Sender 20 gearbeitet wird. Es kann eine Anzeige für die jeweiligen Betriebszustände der Kochstellen und/oder Kochgefäße vorgesehen sein, die z.B. auch anzeigt, ob sich die Kochstelle im manuellen oder automatischen Betrieb befindet. Dabei kann z.B. die Anzeige für Automatik-Betrieb (Steuerung vom Kochgefäß) durch ein "A" signalisiert werden, das von einer üblichen 7-Segment-Anzeige, wie von einem LCD- oder LED-Anzeigefeld, gebildet wird.

Fig. 6 zeigt ein schematisches Schaltbild der Empfangseinheit 35. Die insgesamt fünf Antennen in Form von Spulen mit Ferritkernen sind so geschaltet, daß jeweils zwei einander gegenüberliegende gegensinnig in Reihe geschaltet sind, so daß bei der Feststellung eines Feldes gleicher Orientierung an beiden Antennen sich die empfangenen Signale gegeneinander aufheben, während sich bei gegensinniger Durchflutung ein verstärktes Signal ergibt. Die so in Reihe geschalteten Antennenspulen 15a, 15c bzw. 15b, 15d bilden die Induktivitäten in einem Schwingkreis, der durch eine Kapazität, d.h. einen Kondensator 41, vervollständigt wird. Das gleiche gilt für den nur die Antenne 15REF enthaltenen Referenzschwingkreis.

Die vom Sender gesendeten hochfrequenten Signale im Bereich von beispielsweise 500 kHz induzieren in den Empfängerantennen eine elektrische Spannung. Die die Zuordnungsantennen 15a, c und 15b, d enthaltenen Empfängerkreise 42, 43 enthalten je einen Signalmixer 44a, b und der Referenzkreis 45 deren zwei (44c, d). Ein quarzgesteuerter Taktgeber 60 gibt die der Sendefrequenz entsprechende Empfangs-Trägerfrequenz vor. Von dem Taktgeber 60 erhält der Signal-Mixer 44d direkt und die Mixer 44a-c über einen 90°-Phasenschieber 46 die Trägerfrequenz, z.B. eine Frequenz von 500 kHz. Diese erzeugt durch Differenzbildung in den Mixern eine niedrigere Frequenz, die Tiefpaßfiltern 61 zugeführt werden. Da die Sendefrequenz FSK-moduliert ist, d.h. entsprechend der Signalbedeutung "1" oder "0" z.B. 510 oder 490 kHz beträgt, wird so die Demodulation vorgenommen. Die Tiefpaßfilter 61 ermöglichen dem Empfänger, selektiv zu arbeiten, indem sie Einflüsse von unerwünschten Quellen reduzieren.

In den Verstärkern 47a-d werden aus den gefilterten Signale Rechtecksignale erzeugt. Der Ausgang der Verstärker 47a-c ist an die "D"-Eingänge von Flip-Flop-Schaltungen 48a-c angeschlossen, während der Mixer 44 über seinen Tiefpaßfilter 61 und den Verstärker 47d ein Taktsignal (Clock=CK) an die "CK"-Eingänge aller Flip-Flops 48a-c gibt. Dadurch werden die Signalzustände, die zum Zeitpunkt des Taktsignals am Eingang "D" anliegen, festgehalten und weitergeleitet. Die Flip-Flops 48a, b erzeugen binäre Signale, die aus den Schwingkreisen 42, 43 stammen und Links/Rechts (L/R) bzw. Oben/Unten (U/D) bedeuten, während der Flip-Flop 48c aus dem Referenzkreis 45 über den Mixer 44c, einen der Tiefpaßfilter 61 und den Verstärker 47c die übertragenen binären Daten erhält und über einen Symbol- bzw. Daten-Synchronisator 62 der weiteren Auswertung zugeleitet. Die Kreise 42, 43 liefern also die Positionierungsdaten für das Kochgefäß, während der Referenzkreis 45 sowohl die Taktsteuerung als auch die Erfassung der übermittelten Daten besorgt.

Die am Ausgang "Q" der Flip-Flops anliegenden binären Signale, die im Kreis 42 rechts/links (R/L) und im Kreis 43 oben/unten (U/D) bedeuten, werden im Mikroprozessor 34 (Fig. 5) zur Ansteuerung der jeweiligen Kochstelle 14 verwendet. Nach der Lokalisierung des Senders in der beschriebenen Weise wird der zugehörige Datensatz ebenfalls dem Mikroprozessor zugeführt, so daß dieser die Kochstelle mit den für den Kochvorgang notwendigen Daten versorgt. Dabei kann die Programmsteuerung vom Mikroprozessor vorgenommen werden, wenn sie nicht im Sender selbst integriert ist. In diesem Falle würden vom Sender zusätzlich zu den entsprechenden Zustandsdaten auch am Sender eingestellte Programme oder Temperatureinstellwerte übermittelt werden.

### BESCHREIBUNG DES AUSFÜHRUNGSBEISPIELS NACH DEN FIG. 7 - 9

Die Feldlinienverteilung nach Fig. 2 ermöglicht noch eine andere Antennenanordnung als in Fig. 1 dargestellt. Es ist zu erkennen, daß die Feldlinien von der Kochgefäßposition aus auch radial und damit auch horizontal verlaufen.

Fig. 7 zeigt ein Blockdiagramm des Senders 20.

In Fig. 8 befindet sich der Sender auf der Kochstelle 14UL, d.h. oben links. Die Antennen sind mit horizontaler Ausrichtung, d.h. als liegende Spulen mit im wesentlichen horizontaler Achse und in dieser Richtung verlaufendem Ferritstab z.B. unterhalb der Glaskeramikplatte 12 angeordnet, und zwar je eine Referenzantenne in der Mitte jeder Seite der Kocheinheit, d.h. etwa auf den mittleren Symmetrieachsen der 4-Kochstellen-Anordnung. Diese vier Referenzantennen 15REFa - 15REFd sind wiederum so geschaltet, wie die Antennen 15a - d gemäß Fig. 6, d.h. gegensinnig in Reihe. Im Zentrum zwischen den Kochstellen sind zwei weitere Antennen 15e und 15f mit sich kreuzenden Ausrichtungen angeordnet.

Der Feldverlauf ist aus Fig. 8 erkennbar. Während die vier Referenzantennnen 15REFa - d jeweils die gleiche Feldorientierung detektieren (von innen nach außen), weil die Referenzantennen mit ihren Ausrichtungen jeweils zum Zentrum der Kocheinheit weisen, werden die Zuordnungs-Antennen 15e und 15f je nach Position des Senders 20 in einem der vier Quadranten, die die Kochstellen 14 enthalten, in einem bestimmten Orientierungsmuster durchflossen, so daß in ihnen ein bestimmtes Muster von Polaritäten bzw. Phasenlagen zu jedem Zeitpunkt induziert wird. So könnte beispielsweise, bezogen auf die Zuordnungsantennen 15e und 15f das Muster für die Senderposition UL (in Fig. 8 dargestellt) "++" lauten, während sich bei einer Senderposition auf der Kochstelle DL das Muster "-+", für UR "+-" und DR "--", ergibt.

Die Auswertung erfolgt in einer Schaltung, die in Fig. 9 schematisch dargestellt ist. Der Empfänger enthält zwei Referenzkreise 45a, 45b, in deren Schwingkreisen jeweils die Antennenspulen 15a, 15c sowie 15b, 15d liegen. Zusätzlich sind zwei Zuordnungskreise 42, 43 mit den Antennen 15e und 15f vorgesehen. Die Signale aus den Antennenkreisen werden über übliche Empfangsschaltungen, wie die Signalmischer 44, die auch Filterung und Verstärkung enthalten, einem FSK-Dekoder 49 zugeführt. Dort wird das in Form unterschiedlicher Frequenzhöhen codierte Signal wieder in ein normales Binärsignal rückverwandelt. Einer dieser Dekoder versorgt die DatenwortSynchronisation. In einem Schaltkreis 50 wird eine Amplitudendetektion vorgenommen, und zwar sowohl von dem Referenzkreis 45b als auch von den beiden Zuordnungskreisen 42, 43. Durch Vergleich der Polaritäts- bzw. Phasenlage der beiden Referenzkreise 45a 45b, unterstützt von der Amplitudenerkennung im Kreis 50, wird ermittelt, ob der Sender sich überhaupt im Bereich der Kocheinheit befindet. Gegebenenfalls wird ein Signal "Positionsfehler" einem Schaltkreis 51 zugeleitet, der verhindert, daß die an sich aufgrund der übrigen Positionierungsdaten ausgewählte Kochstelle 14 inganggesetzt wird. Diese Positionierungsfehler-Erkennung verwendet die Tatsache, daß bei einer Verschiebung des Senders in einen Bereich außerhalb des von den Referenzantennen 15a - 15d umgebenen Bereichs sich an wenigstens einer der Referenzantennen die Polarität gegenüber den übrigen umkehrt, so daß dann wegen der Gegeneinanderschaltung die Amplituden so unterschiedlich werden, daß dies ohne weiteres erkannt werden kann. Ein Positionierungsfehler wird immer dann angezeigt, wenn entweder die Phase einer der Referenzspule eine Phasenverschiebung von 180° erfährt und/oder eines oder mehrere von den Antennen empfangenen Signal-Amplituden kleiner als ein vorgegebener Schwellenwert sind.

Über verschiedene SIPO-Register 52 (Serial In and Parallel Out), d.h. Register mit seriellem Eingang und parallelem Ausgang, wird die Positionserkennung 53, die die entsprechenden Vergleiche enthält, angesteuert, die die Positionierungssignale L/R und U/D ausgeben.

Es ist zu erkennen, daß unter Verwendung der erwähnten Grundprinzipien zahlreiche Möglichkeiten vorhanden sind, um eine Positionserkennung durchzuführen. Auch die Anordnung kann jeweils nach den Bedürfnissen und der vorhandenen Beheizungsart angepaßt werden. So könnten beispielsweise zur Erleichterung des elektrischen Anschlusses die Antennen an die einzelnen Heizeinheiten angeschlossen oder in diesen integriert sein. Gegebenenfalls könnte sogar ein Heizwiderstand oder eine Beheizungs-Induktionsspule als Antenne dienen. Auch in der Anordnung des Senders und seiner Sendespulen können zahlreiche Varianten Anwendung finden. So könnten beispielsweise zwei Sendespulen vorgesehen sein, wenn der Sender in einem Griff oder Henkel des Kochgefäßes integriert ist, um die anderenfalls entstehende Unsymmetrie auszugleichen.

## Patentansprüche

1. Verfahren zur Übermittlung von Daten von einem Kochgefäß (17) zu einer Kocheinrichtung (11) mit wenigstens zwei Kochstellen (14) mittels drahtloser Datenübermittlung, bei dem das von einem dem Kochgefäß (17) zugeordneten Sender (20) ausgesandte Signal durch wenigstens einen der Kocheinrichtung zugeordneten Signalaufnehmer (15) empfangen und zur Bestimmung der Zuordnung des Kochgefäßes (17) zu einer bestimmten Kochstelle (14) positionsabhängig ausgewertet wird.

2. Verfahren nach Anspruch 1, dadurch gekennzeichnet, daß das Signal in Form eines elektromagnetischen oder magnetischen Wechselfeldes gesendet wird und die Signalaufnehmer (15) einem Empfänger (35) zugeordnete, ggf. als Spulen ausgebildete Antennen sind, wobei die Auswertung der Signale in Abhängigkeit von der vom Signalaufnehmer (15) festgestellten Feldrichtung erfolgt, wobei vorzugsweise Sender (20) und Empfänger (35) mittels eines magnetischen Wechselfeldes mittels Gegeninduktion miteinander kommunizieren und/oder die Auswertung einen Vergleich der Feldausrichtung in wenigstens einer Zuordnungs-Antenne (15a - 15d), in der das Feld seine Orientierung je nach Positionierung des Senders (20) ändert, mit der stets gleichbleibenden Feldausrichtung in wenigstens einer Referenzantenne (15) erfolgt und/oder bei Vorhandensein von leistungsübertragenen elektromagnetischen Feldern, z.B. von Induktionskochstellen, im Bereich der Datenübermittlung, diese elektromagnetischen Leistungsfelder zur Datenübermittlung zeitweise ausgeschaltet werden.

3. Verfahren nach Anspruch 1 oder 2, dadurch gekennzeichnet, daß das übermittelte Signal in dem wenigstens einen Signalaufnehmer (15) in Abhängigkeit von der Position des Senders (20) ein Muster von Polaritäten bzw. Phasenlagen hervorruft, das zur Positionserkennung ausgewertet wird, wobei die Signalaufnehmer (15) vorzugsweise so angeordnet sind, daß sich das Muster auch dann ändert, wenn der Sender sich in einem größeren als dem vorbestimmten Abstand vom Zentrum der Kocheinrichtung (11) befindet.

4. Verfahren nach einem der vorhergehenden Ansprüche, dadurch gekennzeichnet, daß der Sender (20) ein Triggersignal aussendet, das den Meßzeitpunkt für die Bestimmung der Polarität bzw. Phasenlage an dem wenigstens einen Signalaufnehmer (15) bestimmt.

5. Verfahren nach einem der vorhergehenden Ansprüche, dadurch gekennzeichnet, daß die Auswertung einen Vergleich der Phasenlage der von den einzelnen Signalaufnehmern (15) empfangenen Signale beinhaltet.

6. Verfahren nach einem der vorhergehenden Ansprüche, dadurch gekennzeichnet, daß die Signale in gewissen Zeitabständen gesendet werden, wobei ggf. Signale von unterschiedlichen Sendern (20) nacheinander gesendet und vorzugsweise durch einen dem Sender (20) zur Abstimmung der Sendezeit zugeordneten Empfänger (28) gesteuert werden oder die Signale verschiedener Sender (20) auf unterschiedlichen Frequenzen gesendet werden.

7. Verfahren nach einem der vorhergehenden Ansprüche, dadurch gekennzeichnet, daß die Übermittlung binärer Signale mit Frequenzverschiebungs-Verschlüsselung (FSK) erfolgt.

8. Verfahren nach einem der vorhergehenden Ansprüche, dadurch gekennzeichnet, daß die Einstellung der Daten für den Kochvorgang, wie Temperatur, Dauer, Leistung etc. an dem Kochgefäß (17) bzw. seinem zugeordneten Sender (20) vorgenommen wird.

9. Einrichtung zur Übermittlung von Daten von einem Kochgefäß (17) zu einer Kocheinrichtung (11) mit wenigstens zwei Kochstellen (14) mittels drahtloser Datenübermittlung, insbesondere nach einem der vorhergehenden Ansprüche, mit wenigstens einem einem Kochgefäß (17) zugeordneten Sender (20) und einem Empfänger (35) für die übermittelten Daten, wobei der Empfänger (35) an wenigstens einen positionsabhängig arbeitenden Signalaufnehmer (15) angeschlossen ist, mit Positionserkennungsmitteln (48, 53), die die positionsabhängigen Signale des wenigstens einen Signalaufnehmers (15) verarbeiten und die Daten Steuermitteln (39, 40) derjenigen Kochstellen (14) zuleiten, auf der sich das den Sender (20) aufweisende Kochgefäß (17) befindet.

10. Einrichtung nach Anspruch 9, dadurch gekennzeichnet, daß mehrere Signalaufnehmer (15) an unterschiedlichen Positionen der Kocheinrichtung (11) angeordnet sind.

11. Einrichtung nach Anspruch 9 oder 10, dadurch gekennzeichnet, daß für mehrere Sender (20) ein gemeinsamer Empfänger (35) vorgesehen ist.

12. Einrichtung nach einem der Ansprüche 9 bis 11, dadurch gekennzeichnet, daß die Antennen (15) mit richtungsabhängiger Empfangscharakteristik als Spulen mit einem Ferritkern (16) ausgebildet sind und/oder die Antennen (15) an der Kocheinrichtung (11) so angeordnet sind, daß wenigstens eine Antenne (15REF) (Referenzantenne) bei der Positionierung des Senders (20) auf jeder der Kochstellen (14) das magnetische Feld in derselben Orientierung als Referenzsignal empfängt und wenigstens eine weitere Antenne (15a - 15d) (Zuordnungsantenne) das Feld je nach Positionierung des Senders (20) in unterschiedlicher Orientierung als Zuordnungssignal empfängt und/oder die Antennen (15) eine vertikale Richtungsabhängigkeit aufweisen, wobei vorzugsweise wenigstens eine Referenzantenne (15) im Innenbereich zwischen den Kochstellen (14) liegt, während wenigstens eine, bevorzugt vier, Zuordnungsantennen (15a - d) im Außenbereich bzw. zwischen den Kochstellen (14) liegen.

13. Einrichtung nach einem der Ansprüche 9 bis 12, dadurch gekennzeichnet, daß die Antennen (15REFa - d, 15e, 15f) eine horizontale Richtungsabhängigkeit aufweisen, wobei vorzugsweise wenigstens eine Referenzantenne, bevorzugt deren vier, in einem Außenbereich außerhalb des von den Kochstellen (14) eingenommenen Bereichs der Kocheinrichtung (11) liegen, und wenigstens eine, bevorzugt zwei, Zuordnungsantennen (15e, 15f) in einem Innenbereich zwischen den Kochstellen (14) angeordnet sind, wobei insbesondere bei einer Kocheinrichtung (11) mit vier Kochstellen (14) vier Referenzantennen (15REFa - d) mit zum Zentrum der Kocheinrichtung (11) weisender Empfangsrichtung jeweils im Bereich der Mitte einer Seitenkante der Kocheinrichtung (11) und zwei Zuordnungsantennen (15e, 15f) mit ihrer Empfangsrichtung unter etwa 90° gegeneinander versetzt im Zentrum der Kocheinrichtung (11) angeordnet sind.

14. Einrichtung nach einem der Ansprüche 9 bis 13, dadurch gekennzeichnet, daß der Sender (20) am Kochgefäß (17), vorzugsweise an einem Griff oder einem Kochgefäßdeckel, anzuordnen ist.

15. Einrichtung nach einem der Ansprüche 9 bis 14, dadurch gekennzeichnet, daß der Sender (20) mit einem Fühler (23) für Zustandsdaten des Kochgefäßes (17) bzw. seines Inhaltes, wie Temperatur, Druck, Feuchtigkeit, versehen oder verbunden ist, wobei ggf. der Sender (20) einen Fühler für die Stellung eines druckabhängig verschiebbaren Stiftes am Deckel eines Druckkochtopfes aufweist, und/oder der Sender (20) eine manuelle Einstellmöglichkeit (25) für den Kochvorgang aufweist.

16. Einrichtung nach einem der Ansprüche 9 bis 15, dadurch gekennzeichnet, daß mehrere Antennen (15), insbesondere jeweils zwei mit gleicher Orientierung des Feldes beaufschlagte Antennen (15a, c; 15b, d) in einem Empfängerschwingkreis in Reihe, jedoch vorzugsweise gegensinnig, geschaltet sind.

17. Einrichtung nach einem der Ansprüche 9 bis 16, dadurch gekennzeichnet, daß die Steuermittel (40) der Kocheinrichtung (11) eine an der Kocheinrichtung manuell einstellbare Steuerung, wie Temperatur- oder Leistungssteuerung (36), und ein Umschaltglied (38) aufweisen, mit dem die Steuermittel (40) auf Sendersteuerung bzw. -regelung umschaltbar sind, wobei vorzugsweise die Umschaltung von herkömmlichem Betrieb auf ein sendendes Kochgefäß (17) automatisch erfolgt und dessen Steuer- und Regelfunktionen auf die Heizelemente der Kochstellen (14) übertragen werden.

18. Einrichtung nach einem der vorhergehenden Ansprüche, dadurch gekennzeichnet, daß der Automatikbetrieb durch Anzeigemittel signalisiert wird, wobei vorzugsweise die Signalisierung über ein aus einer 7-Segmentanzeige gebildetes A erfolgt.
